# EUROPÄISCHE PATENTSCHRIFT

(11) **EP 4 076 817 B1**
(45) Veröffentlichungstag und Bekanntmachung des Hinweises auf die Patenterteilung: **27.03.2024**
(21) Anmeldenummer: 20853595.5
(22) Anmeldetag: 15.12.2020
(51) Int. Cl.: B23K 1/00, B21D 22/04, B21D 28/02, B23K 1/20, B23K 3/08, B23K 31/02, B23K 33/00, B23K 101/18

(54) **VERFAHREN ZUR HERSTELLUNG EINES LOTDEPOTS SOWIE METALLBLECH MIT EINEM LOTDEPOT, SO DASS DIE QUERSCHNITTSFLÄCHE DER MÜNDUNG DER VERTIEFUNG VERKLEINERT IST**
METHOD OF MANFACTURING A BRAZE DEPOT AND CORRESPONDING METAL SHEET WITH A BRAZE DEPOT, SUCH THAT THE OPENING SECTION OF THE RECESS IS REDUCED
MÉTHODE DE FABRICATION D'UN DÉPÔT DE BRASURE ET TÔLE MÉTALLIQUE AVEC UN DÉPÔT DE BRASURE CORRESPONDANT, TEL QUE LE DÉBOUCHÉ DE L'ORIFICE EST RÉDUIT.

(30) Priorität: 17.12.2019 DE 102019134680
(43) Veröffentlichungstag der Anmeldung: 26.10.2022
(73) Patentinhaber: KME Germany GmbH, 49074 Osnabrück (DE)
(72) Erfinder: KOVERMANN, Marc, 49170 Hagen (DE); NÄRDEMANN, Ralph, 59394 Nordkirchen (DE)
(74) Vertreter: Griepenstroh, Jörg
(86) Internationale Anmeldenummer: PCT/DE2020/101065
(87) Internationale Veröffentlichungsnummer: WO 2021/121480

(56) Entgegenhaltungen:
- DE-A1-102014 101 695
- DE-C1- 19 512 089
- DE-C1- 19 729 967

## Beschreibung

Die Erfindung betrifft ein Verfahren zur Herstellung eines Lotdepots in einem Metallblech und ein Metallblech, siehe Ansprüche 1 und 5.

Eine Vielzahl von Bauteilen, insbesondere Stanz- und Kontaktbauteile, werden mit anderen Bauteilen verlötet, wie es sehr häufig in der Automobilindustrie vorkommt. Diese anderen Bauteile, an denen Stanz- und Kontaktteile befestigt werden sollen, befinden sich z.B. an Autoscheiben. Im Anwendungsgebiet der Scheibenheizung werden z.B. Stanz- und Kontaktteile inklusive Kabel und Sensoren verlötet. Das Lot wird in sogenannten Lotpads in Plättchenform hierzu auf den Stanz- und Kontaktteilen aufgebracht und kurz erwärmt, so dass eine stoffschlüssige Verbindung entsteht.

Beim Transport oder durch Erschütterungen können sich die Lotplättchen lösen oder sogar abfallen, wodurch eine Weiterverarbeitung des Stanz- oder Kontaktteils unmöglich wird.

Die DE 10 2014 101 695 A1 offenbart ein Verfahren zum Herstellen eines elektrischen Kontakts mit einer Kontaktfläche zum Kontaktieren eines Bauteils, wobei an der Kontaktfläche ein Befestigungsbereich für ein Lotdepot vorgesehen ist. Der Befestigungsbereich umfasst dabei eine Befestigungseinrichtung mit einer zur Oberseite der Kontaktfläche hin geöffneten Vertiefung. Die Befestigungseinrichtung weist an der Unterseite der Kontaktfläche eine Ausformung auf und die Vertiefung umfasst einen Hinterschnitt.

Die DE 197 29 967 C1 (beschreibend den Oberbegriff der Ansprüche 1 und 5) offenbart ein Verfahren und eine Vorrichtung zur mechanischen Erzeugung von Zusatzwerkstoff-Depots an Feinblechen, die als punkt- oder linienförmige Depotsenken ausgeführt sind. Die Zusatzwerkstoff-Depots sollen vorzugsweise für ein Widerstands-Umform-Löten erzeugt werden. Das Zusatzwerkstoff-Halbzeug als Band, Draht oder Linse wird mittels eines kombinierten Umform- und Schneidprozesses in einer im Blechteil erzeugten Einsenkung fixiert. Durch das Herstellen der Einsenkung entsteht auf der gegenüberliegenden Seite des Blechteils ein Vorsprung.

Die DE 195 12 089 C1 beschreibt ein Verfahren zur Verbindung von unformbaren Blechbauteilen, vorzugsweise Feinblechen, durch Löten. Hierzu wird ein Blechteil örtlich umgeformt, um einen Hohlraum zur Aufnahme mindestens eines Lotteiles zu bilden. Das Lotteil wird in den Hohlraum eingelegt und fixiert. Anschließend werden die zu fixierenden Blechbauteile verbunden und das Hohlraumvolumen durch Umformung der Hohlraumumhüllung verringert mit jeweils einer von oben und unten einwirkenden Elektrode oder eines geeigneten Umformwerkzeuges. Auf diese Weise werden die beiden Bauteile miteinander verbunden.

Der Erfindung liegt die Aufgabe zugrunde, ein Verfahren zur Herstellung eines Lotdepots in einem Metallblech und ein Metallblech aufzuzeigen, welches es ermöglicht, ein Lot verliersicher an dem Metallblech zu befestigen. Ferner soll ein Lotdepot mit diesen Eigenschaften aufgezeigt werden.

Ein Verfahren mit den Merkmalen des Patentanspruchs 1 löst die Aufgabe ebenso wie ein Metallblech mit einem Lotdepot mit den Merkmalen des Patentanspruchs 5, das nach diesem Verfahren hergestellt ist.

Das erfindungsgemäße Verfahren sieht vor, dass ein Metallblech mit einer Oberseite und einer Unterseite in einem ersten Schritt durch Tiefziehen mit einer Vertiefung in der Oberseite versehen wird. Die Begriffe Oberseite und Unterseite sind nur stellvertretend für die gegenüberliegenden Seiten des Metallbleches zu sehen. Sie sind austauschbar. Bei dem Metallblech kann es sich insbesondere um ein Stanz- oder ein Kontaktteil handeln. Das Metallblech muss nicht zwingend insgesamt eben sein. Es kann auch gekrümmte oder geformte Bereiche aufweisen. Lotdepots können an der Oberseite und/oder an der Unterseite angebracht werden.

Die Vertiefung wird durch Zugdruckumformung hergestellt, indem ein Teil des Werkstoffes durch spanlose Umformung von der Oberseite in Richtung zur Unterseite verlagert wird, so dass der verlagerte Werkstoff gegenüber der Unterseite vorsteht. Es entsteht ein Vorsprung. Das Tiefziehen ist mit dem Prägen vergleichbar, wobei auf der gegenüberliegenden Seite des Metallblechs die Prägestruktur ausgebildet wird. Das Tiefziehen erfolgt insbesondere mittels Formwerkzeugen, d. h. mittels eines Stempels und eines Gegenhalters. Die Verwendung anderer Wirkmedien, wie z. B. die Verwendung von Gasen oder Flüssigkeiten, ist ebenso möglich, wie das Tiefziehen mit Wirkenergien, wie z. B. mittels der Magnetumformung.

Durch das Tiefziehen entsteht auf der Seite, auf der ein Wirkmedium bzw. das Formwerkzeug angreift, eine Vertiefung und auf der anderen Seite ein Vorsprung. Der durch das Tiefziehen bewegte Butzen wird jedoch nicht ausgestanzt. Es entsteht keine Öffnung und keine Durchstellung in dem Metallblech, sondern lediglich eine tiefe Prägung.

Im nächsten Schritt wird ein Kragen an der Vertiefung ausgebildet. Der durch das Tiefziehen an der Unterseite vorstehende Werkstoff wird wieder in die entgegengesetzte Richtung gedrückt, d. h. wieder in Richtung zur Oberseite verpresst. Das Pressen kann von der Oberseite und/oder der Unterseite her erfolgen. Währenddessen befindet sich ein Stempel in der Vertiefung, so dass die Vertiefung nicht mehr komplett gefüllt werden kann. Das verpresste Material soll vielmehr seitlich an dem Stempel vorbeifließen. Auf diese Weise wird ein Kragen hergestellt, der den Stempel und die den Stempel aufnehmende Vertiefung umgibt.

Im nächsten Schritt wird der Stempel aus der Vertiefung entfernt. Der Kragen wird anschließend zumindest teilweise in Richtung zur Vertiefung verpresst. Dadurch wird die Querschnittsfläche einer Mündung der Vertiefung verkleinert. Es wird eine hinterschnittene Vertiefung geschaffen. Diese hinterschnittene Vertiefung bildet eine Befestigungsmöglichkeit für ein Lot, das in diese Vertiefung gepresst werden kann bzw. in dieser hinterschnittenen Vertiefung verliersicher verankert werden kann. Die Geometrie ermöglicht es, das Lot auch dann sicher zu halten, wenn das Metallblech z. B. beim Transport oder Handling, erschüttert wird. Durch den Formschluss des Lots in dem Lotdepot ist ein Verlust des Lotes ausgeschlossen. In jedem Fall ist eine Weiterverarbeitung mittels Löten möglich.

Das erfindungsgemäße Verfahren sieht vor, dass der durch das Tiefziehen als Vorsprung unterseitig vorstehende Werkstoff vollständig zurückgedrückt wird, so dass die Unterseite im Bereich der Vertiefung in einer Ebene mit benachbarten Bereichen der Unterseite ist. Mit anderen Worten wird die Unterseite geglättet. Vorzugsweise wird auch die Oberseite geglättet, indem der Kragen vollständig zurückgedrückt wird, so dass er nicht über die Oberseite vorsteht. Dadurch kann für bestimmte Anwendungsfälle die erforderliche Ebenheit des Metallblechs auch im Bereich des Lotdepots erreicht werden. Das Glätten kann in einem Presswerkzeug, beispielsweise auch durch Walzen erfolgen. Dadurch sind die Oberseite und die Unterseite frei von Vorsprüngen bedingt durch die Herstellung der Vertiefung.

Es ist mit dem erfindungsgemäßen Verfahren möglich, an ein und demselben Metallblech mehrere Lotdepots gleichzeitig einseitig oder wechselseitig herzustellen, insbesondere, wenn es sich um relativ weiche Werkstoffe handelt.

Die Erfindung betrifft ferner ein Metallblech mit einem Lotdepot entsprechend Anspruch 5 sowie ein Lotdepot, das in dem Metallblech mit dem Verfahren nach einem der vorstehend erläuterten Ansprüche hergestellt worden ist. Das Lotdepot wird hierbei von einer hinterschnittenen Vertiefung in einer Oberseite des Metallbleches gebildet. Insbesondere kann eine Querschnittsfläche der Vertiefung von einer Oberseite zu einem Boden der Vertiefung hin kontinuierlich zunehmen. Die Zunahme kann gleichmäßig oder ungleichmäßig erfolgen. Bevorzugt erfolgt die Zunahme der Querschnittsfläche gleichmäßig. In diesem Fall besitzt die Vertiefung des Lotdepots einen schwalbenschwanzförmigen Querschnitt. Die mündungsseitige Verengung des insbesondere kreisrunden Durchmessers des Lotdepots ermöglicht es, ein geeignetes Lot hinter die Mündung einzubringen und dadurch formschlüssig und unverlierbar an dem Metallblech für die weitere Verarbeitung zu lagern.

Das Lotdepot hat zudem den Vorteil, dass die Oberfläche im Bereich des aufzuschmelzenden Lotes vergrößert ist, was wiederum zu einer verbesserten Lötverbindung beitragen kann.

Die Erfindung wird nachfolgend anhand eines in den Zeichnungen dargestellten Ausführungsbeispiels erläutert. Es zeigen:
- Figur 1: ein Metallblech im Querschnitt während eines ersten Fertigungsschrittes;
- Figur 2: das Metallblech nach dem ersten Fertigungsschritt in Blickrichtung auf die Unterseite;
- Figur 3: das Metallblech der Figur 2 in Blickrichtung auf die Oberseite;
- Figur 4: das Metallblech der Figur 3 während des nächsten Fertigungsschrittes;
- Figur 5: das Metallblech nach Beendigung des Fertigungsschrittes der Figur 4 in Blickrichtung auf seine Oberseite und
- Figur 6: das Metallblech der Figur 5 während eines letzten Fertigungsschrittes.

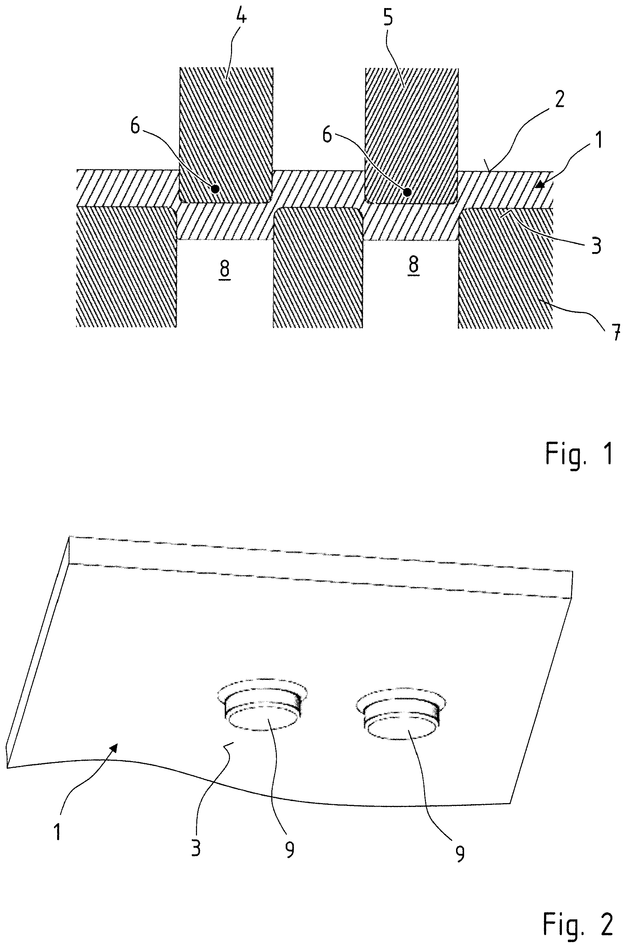

Die Figur 1 zeigt ein Metallblech 1 mit einer Oberseite 2 und mit einer Unterseite 3. Das Metallblech 1 befindet sich in einem Presswerkzeug. Zwei Stempel 4, 5 dienen als Oberwerkzeug und werden gegen die Oberseite 2 des Metallblechs 1 verfahren, so dass in dem Metallblech 1 identische Vertiefungen 6 entstehen. Das verdrängte Material wird in Richtung zu Unterseite 3 verdrängt. Hierzu befinden sich im Unterwerkzeug 7 zur Querschnittsfläche der Stempel 4, 5 passende Aussparungen 8. Die Stempel 4, 5 bzw. die Aussparungen 8 im Unterwerkzeug 7 sind vorzugsweise im Querschnitt kreisrund.

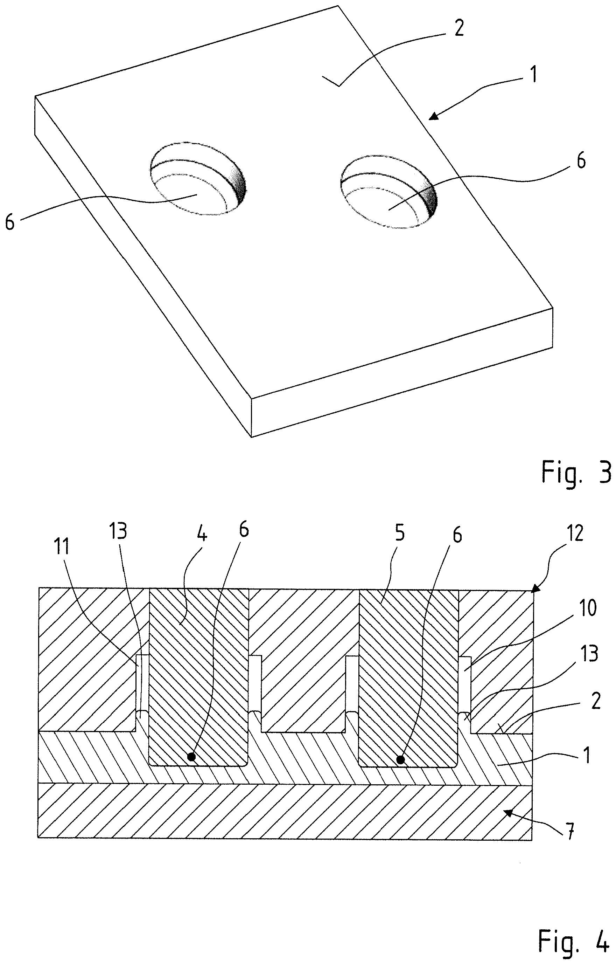

Es ist zu erkennen, dass die durch Materialverdrängung während des Tiefziehens entstehenden Vorsprünge nicht von dem Metallblech 1 getrennt werden, sondern über einen schmalen Steg mit dem Metallblech 1 verbunden bleiben. Die Figur 2 zeigt die Unterseite 3 des Metallblechs 1 in Blickrichtung auf die durch das Tiefziehen entstandenen Vorsprünge 9, die einen im Wesentlichen zylindrischen Querschnitt haben. Die Figur 3 zeigt das Metallblech 1 in Blickrichtung auf seine Oberseite 2. Die beiden Vertiefungen 6 haben eine zylindrische Gestalt.

Im nächsten Fertigungsschritt werden die Vorsprünge 9, die gegenüber der Unterseite 3 vorstehen zurückgedrückt. Hierzu wird das Metallblech 1 gemäß der schematischen Darstellung der Figur 4 in ein weiteres Umformwerkzeug eingelegt. Die dortigen Stempel 4, 5 fassen in die Vertiefungen 6 des Metallblechs und füllen diese aus. Gleichzeitig sind die Stempel 4, 5 benachbart zur Oberseite 2 des Metallblechs 1 von Formhohlräumen 10, 11 umgeben. In diesem Ausführungsbeispiel handelt es sich um ringförmige Formhohlräume 10, 11, die von dem jeweiligen Stempel 4, 5 in Längsrichtung durchsetzt sind. Bei der Erfindung können entweder durch das Unterwerkzeug 7 die Vorsprünge 9 soweit eingeebnet werden, dass Material des Metallblechs in die Formhohlräume 10, 11 fließt. Alternativ oder zusätzlich kann das Oberwerkzeug 12 relativ zu den Stempeln 4, 5 abgesenkt werden, so dass der Werkstoff entgegen der Bewegung des Oberwerkzeugs 12 rückwärts in die Formhohlräume 10, 11 fließt.

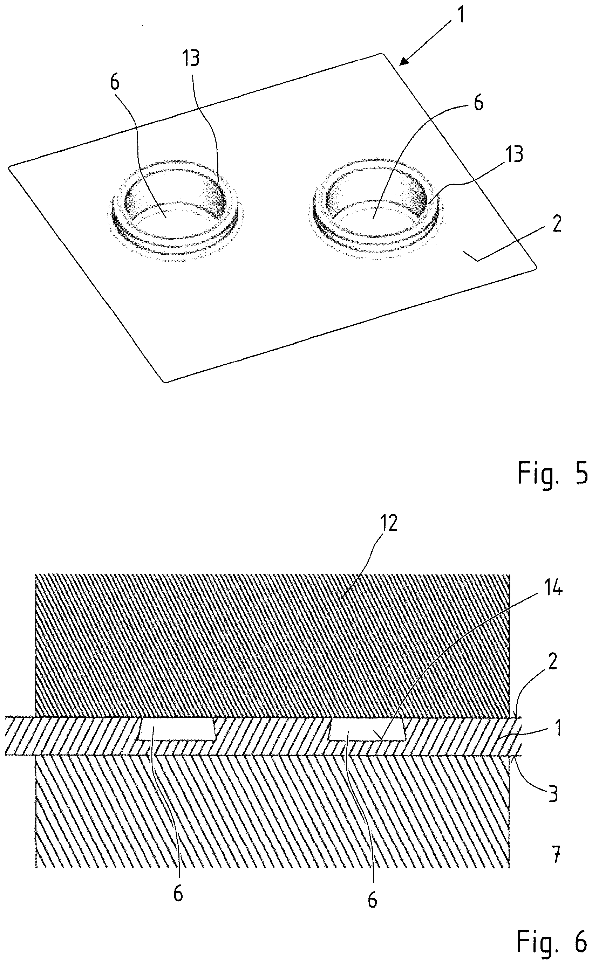

Unabhängig davon, ob das Unterwerkzeug 7, das Oberwerkzeug 12 oder gleichzeitig noch die Stempel 4, 5 betätigt werden, bildet sich umfangsseitig der Stempel 4, 5 ein Kragen 13 aus, wie er insbesondere in der Draufsicht auf die Oberseite 2 gemäß Figur 5 zu erkennen ist. Der Kragen 13 schnürt den Querschnitt der Vertiefungen 6 in der Oberseite 2 nicht ein. Die Vertiefungen 6 haben nach wie vor Wände, die im Wesentlichen senkrecht zur Oberseite 2 bzw. zum Metallblech 1 stehen.

Die Orientierung der seitlichen Wände wird in einem abschließenden Fertigungsschritt geändert. Das Metallblech 1 wird noch einmal zwischen ein Oberwerkzeug 12 und ein Unterwerkzeug 7 gelegt, so dass die Oberseite 2 und die Unterseite 3 durch Pressen komplett geglättet werden. Der Werkstoff des Kragens 13 wird hierbei in Richtung zu der Vertiefung 6 verdrängt, so dass die Vertiefung 6 einen schwalbenschwanzförmigen Querschnitt erhält. Dadurch ist die Vertiefung 6 hinterschnitten. Die Querschnittsfläche der Vertiefung 6 nimmt von der Oberseite 2 zu einem Boden 14 der Vertiefung 6 hin kontinuierlich zu.

In einem abschließenden Schritt kann in eine solche Vertiefung 6 ein Lot eingebracht werden, das in einem weiteren Fertigungsschritt aufgeschmolzen wird, um das Metallblech 1 mit weiteren Komponenten zu verbinden. Das Lot kann eingegossen oder auch eingepresst werden, so dass es formschlüssig mit dem Metallblech verankert ist, bevor das Metallblech 1 weiterbearbeitet, insbesondere transportiert, wird.

Die Figuren zeigen beispielhaft einen Anwendungsfall mit zwei identisch konfigurierten Lotdepots. Die Lotdepots können sowohl in größerer Anzahl als auch auf gegenüberliegenden Seiten vorhanden sein. Mehrere Lotdepots können in ihrem Querschnitt auch voneinander abweichende Formen haben.

### Bezugszeichen:

- 1 -: Metallblech
- 2 -: Oberseite von 1
- 3 -: Unterseite von 1
- 4 -: Stempel
- 5 -: Stempel
- 6 -: Vertiefung
- 7 -: Unterwerkzeug
- 8 -: Aussparung
- 9 -: Vorsprung
- 10-: Formhohlraum
- 11 -: Formhohlraum
- 12 -: Oberwerkzeug
- 13 -: Kragen
- 14 -: Boden

## Patentansprüche

1. Verfahren zur Herstellung eines Lotdepots in einem Metallblech (1) mit folgenden Schritten:
a) Ein Metallblech (1) besitzt eine Oberseite (2) und eine Unterseite (3), wobei in einem ersten Schritt durch Tiefenziehen eine Vertiefung (6) in die Oberseite (2) eingebracht wird;
**gekennzeichnet durch** folgende Schritte:
b) Anschließend wird ein gegenüber der Oberseite (2) vorstehender Kragen (13) an der Vertiefung (6) durch Materialumformung des Metallblechs (1) hergestellt;
c) Anschließend wird der Kragen (13) zumindest teilweise in Richtung zur Vertiefung (6) verpresst, so dass eine Querschnittsfläche einer Mündung der Vertiefung (6) verkleinert wird,
d) der durch das Tiefziehen unterseitig vorstehende Werkstoff wird vollständig zurückgedrückt, so dass die Unterseite (3) im Bereich der Vertiefung (6) in einer Ebene mit benachbarten Bereichen der Unterseite (3) ist.

2. Verfahren nach Anspruch 1, **dadurch gekennzeichnet, dass** der Kragen (13) vollständig zurückgedrückt wird, so dass er nicht über die Oberseite (2) vorsteht.

3. Verfahren nach Anspruch 1 oder 2, **dadurch gekennzeichnet, dass** die Oberseite (2) und die Unterseite (3) nach dem Verpressen des Kragens (13) in einer Pressvorrichtung geglättet werden, so dass die Oberseite (2) und die Unterseite (3) frei sind von Vorsprüngen bedingt durch die Herstellung der Vertiefung (6).

4. Verfahren nach einem der Ansprüche 1 bis 3, **dadurch gekennzeichnet, dass** mehrere Vertiefungen (6) gleichzeitig in einer Oberseite (2) des Metallbleches (1) hergestellt werden.

5. Metallblech (1) mit einem Lotdepot in dem Metallblech (1), hergestellt mit einem Verfahren nach einem der Ansprüche 1 bis 4, **dadurch gekennzeichnet, dass** das Lotdepot von einer hinterschnittenen Vertiefung (6) in einer Oberseite (2) des Metallbleches (1) gebildet ist, wobei die Unterseite (3) im Bereich der Vertiefung in einer Ebene mit benachbarten Bereichen der Unterseite (3) ist.

6. Metallblech (1) nach Anspruch 5, **dadurch gekennzeichnet, dass** eine Querschnittsfläche der Vertiefung (6) von einer Oberseite (2) zu einem Boden (14) der Vertiefung (6) hin kontinuierlich zunimmt.

7. Metallblech (1) nach Anspruch 5 oder 6, **dadurch gekennzeichnet, dass** die Vertiefung (6) im Querschnitt schwalbenschwanzförmig ist.

## Claims

1. Method for producing a solder deposit in a metal sheet (1), the method having the following steps:
a) a metal sheet (1) has an upper side (2) and an underside (3), wherein in a first step a depression (6) is introduced into the upper side (2) by deep drawing;
**characterised by** the following steps:
b) then a collar (13) that protrudes in relation to the upper side (2) is produced on the depression (6) by shaping the material of the metal sheet (1);
c) then the collar (13) is pressed at least partially in the direction of the depression (6) so that a cross-sectional area of an opening of the depression (6) is reduced,
d) the material protruding on the underside due to the deep drawing is completely pressed back so that the underside (3) in the region of the depression (6) is in one plane with neighbouring regions of the underside (3).

2. Method according to claim 1, **characterised in that** the collar (13) is completely pressed back so that it does not protrude beyond the upper side (2).

3. Method according to claim 1 or 2, **characterised in that** the upper side (2) and the underside (3) are smoothed in a pressing device after the collar (13) has been pressed, so that the upper side (2) and the underside (3) are free from protrusions caused by producing the depression (6).

4. Method according to any one of claims 1 to 3, **characterised in that** a plurality of depressions (6) are produced simultaneously in an upper side (2) of the metal sheet (1).

5. Metal sheet (1) having a solder deposit in the metal sheet (1), produced by a method according to any one of claims 1 to 4, **characterised in that** the solder deposit is formed by an undercut depression (6) in an upper side (2) of the metal sheet (1), wherein the underside (3) in the region of the depression is in one plane with neighbouring regions of the underside (3).

6. Metal sheet (1) according to claim 5, **characterised in that** a cross-sectional area of the depression (6) increases continuously from an upper side (2) to a base (14) of the depression (6).

7. Metal sheet (1) according to claim 5 or 6, **characterised in that** the depression (6) is swallow-shaped in cross-section.

## Revendications

1. Procédé de fabrication d'un dépôt de soudure dans une tôle métallique (1) avec les étapes suivantes :
a) une tôle métallique (1) comporte un côté supérieur (2) et un côté inférieur (3), dans lequel un évidement (6) est introduit dans le côté supérieur (2) dans une première étape par emboutissage profond ;
**caractérisé par** les étapes suivantes :
b) un rebord (13) faisant saillie par rapport au côté supérieur (2) est ensuite fabriqué au niveau de l'évidement (6) par déformation matérielle de la tôle métallique (1) ;
c) le rebord (13) est ensuite pressé au moins partiellement en direction de l'évidement (6), de sorte qu'une surface de section transversale d'une embouchure de l'évidement (6) soit réduite,
d) le matériau faisant saillie sur le côté inférieur par l'emboutissage est entièrement repoussé, de sorte que le côté inférieur (3) soit, dans la zone de l'évidement (6), dans un plan avec des zones voisines du côté inférieur (3).

2. Procédé selon la revendication 1, **caractérisé en ce que** le rebord (13) est entièrement repoussé de sorte qu'il ne dépasse pas du côté supérieur (2).

3. Procédé selon la revendication 1 ou 2, **caractérisé en ce que** le côté supérieur (2) et le côté inférieur (3) sont lissés dans un dispositif de pressage après le pressage du rebord (13), de sorte que le côté supérieur (2) et le côté inférieur (3) soient exempts de saillies dues à la fabrication de l'évidement (6).

4. Procédé selon l'une quelconque des revendications 1 à 3, **caractérisé en ce que** plusieurs évidements (6) sont fabriqués simultanément dans un côté supérieur (2) de la tôle métallique (1).

5. Tôle métallique (1) avec un dépôt de soudure dans la tôle métallique (1), fabriquée par un procédé selon l'une quelconque des revendications 1 à 4, **caractérisée en ce que** le dépôt de soudure est formé par un évidement (6) en contre-dépouille dans un côté supérieur (2) de la tôle métallique (1), dans laquelle le côté inférieur (3) est, dans la zone de l'évidement, dans un plan avec des zones adjacentes du côté inférieur (3).

6. Tôle métallique (1) selon la revendication 5, **caractérisée en ce qu'**une surface de section transversale de l'évidement (6) augmente de manière continue d'un côté supérieur (2) à un fond (14) de l'évidement (6).

7. Tôle métallique (1) selon la revendication 5 ou 6, **caractérisée en ce que** l'évidement (6) est en forme de queue d'aronde dans la section transversale.
